(19) Europäisches Patentamt
European Patent Office
Office européen des brevets

(11) Veröffentlichungsnummer: **0 064 203**
**A2**

(12) **EUROPÄISCHE PATENTANMELDUNG**

(21) Anmeldenummer: 82103254.7

(22) Anmeldetag: 19.04.82

(51) Int. Cl.³: C 08 G 63/72
B 01 D 17/02
//(C08G63/72, 63/24)

(30) Priorität: 02.05.81 DE 3117367

(43) Veröffentlichungstag der Anmeldung:
10.11.82 Patentblatt 82/45

(84) Benannte Vertragsstaaten:
BE DE FR GB IT NL

(71) Anmelder: BAYER AG
Zentralbereich Patente, Marken und Lizenzen
D-5090 Leverkusen 1, Bayerwerk(DE)

(72) Erfinder: Freitag, Dieter, Dr.
Hasenheide 10
D-4150 Krefeld 1(DE)

(72) Erfinder: Serini, Volker, Dr.
Scheiblerstrasse 81
D-4150 Krefeld 1(DE)

(72) Erfinder: Goossens, John, Ing. grad.
Roggendorfstrasse 51
D-5000 Köln 80(DE)

(72) Erfinder: Bottenbruch, Ludwig, Dr.
Woehlerstrasse 5
D-4150 Krefeld 1(DE)

(72) Erfinder: Hucks, Uwe, Ing. grad.
Am Marienstift 30
D-4234 Alpen(DE)

(54) **Trennung von Zweiphasengemischen, die aromatische Polyester enthalten.**

(57) Bei der Synthese aromatischer Polyester nach dem Zweiphasengrenzflächenverfahren anfallende zweiphasige Gemische lassen sich durch Zusatz ausgewählter Verbindungen in eine wäßrige und eine organische Phase trennen.

EP 0 064 203 A2

Croydon Printing Company Ltd.

0064203

BAYER AKTIENGESELLSCHAFT 5090 Leverkusen, Bayerwerk
Zentralbereich
Patente, Marken und Lizenzen Pv/kl-c

# Trennung von Zweiphasengemischen, die aromatische Polyester enthalten

Die Erfindung betrifft die Trennung von Zweiphasengemischen, die bei der Synthese aromatischer Polyester nach dem Zweiphasengrenzflächenverfahren anfallen, in eine wäßrige und eine organische Phase.

"Aromatische Polyester" im Sinne der Erfindung sind thermoplastische Polyester aus aromatischen Dihydroxiverbindungen und Iso- und/oder Terephthalsäuredichlorid, wobei bis zu 50 Mol-% der Estergruppen durch Carbonatgruppen ersetzt sein können. Auch die unter diese Definition fallenden Polyestercarbonate werden nachfolgend "Polyester" genannt.

Aromatische Polyester und Zweiphasengrenzflächenverfahren zu ihrer Herstellung, wonach Iso- und/oder Terephthalsäuredichlorid in einem mit Wasser nicht mischbaren organischen Lösungsmittel und Diphenole in wäßrig-alkalischer Lösung - meist in Gegenwart von Katalysatoren - zur Reaktion gebracht werden, sind

bekannt (FR-PS 11 77 517, US-PS 32 16 970 und 33 51 624, europäische Patentanmeldung 2130; J. Polym. Sci. USSR, Vo. 9, 1705 - 1711 (1967)). Die Isolierung der entstandenen aromatischen Polyester wird oft dadurch erschwert, bzw. unmöglich gemacht, daß eine Phasentrennung am Ende der Reaktion und/oder nach dem Waschen der organischen Phase nur unvollständig oder überhaupt nicht eintritt, daß sich also Emulsionen bilden.

Das Waschen ist notwendig, um den Polyester elektrolytfrei zu erhalten. Elektrclyte, wie Salze, Säuren und Basen, würden nämlich den Polyester bei der weiteren Verarbeitung schädigen.

Es ist bereits vorgeschlagen worden, die aromatischen Polyester auszufällen und dann zu waschen (US-PS 41 56 069), was aber wegen des erheblichen erforderlichen Aufwands sehr unwirtschaftlich ist.

Dem Fachmann sind Methoden zur Trennung von Emulsionen bekannt; vgl. Methoden der Organischen Chemie (Houben-Weyl), 4. Aufl., Bd. I/1, 213 - 221, Georg Thieme-Verlag, Stuttgart, 1958. U.a. wird auch die Zugabe von Desmulgatoren, also Verbindungen, die Emulsionen durch ihre Anwesenheit brechen können, empfohlen. Bei Verwendung dieser Desmulgatoren hat sich nun in der Vergangenheit herausgestellt, daß eine saubere Trennung der zweiphasigen Systeme im allgemeinen dann gewährleistet ist, wenn man recht exakt die benötigte Menge des Zusatzes einhält; kleinere Mengen brechen die Emulsionen nicht, größere Mengen führen zu einer Emulsion des umgekehrten Typs (bei Brechen einer Öl-in-Wasser-Emulsion also zu einer Wasser-in-Öl-Emulsion).

Wie nun überraschenderweise gefunden wurde, eignen sich einige Verbindungen als Desmulgatoren für Zweipasengemische, die bei der Synthese aromatischer Polyester nach dem Zweiphasengrenzflächenverfahren anfallen, deswegen ganz ausgezeichnet, weil sie - entgegen den oben geschilderten Erfahrungen - keine derart ausgeprägte Wirkungsabhängigkeit von der zugesetzten Menge wie die meisten Desmulgatoren aufweisen.

Das Auffinden der obengenannten Desmulgatoren ist von hervorragender technischer Bedeutung, weil bei der Produktion der Polyester im allgemeinen Schwankungen der Reaktionsbedingungen, die auch zu Schwankungen in der Emulsionensbildung führen, nicht zu vermeiden sind und deshalb die konventionellen Methoden der Desmulgierung, die oben geschildert wurden, versagen. Durch Einsatz der obengenannten Desmulgatoren werden erhebliche Mengen an Rohstoffen, Materialien und Zeit eingespart und in vielen Fällen eine Produktion des Polyesters überhaupt erst ermöglicht.

Gegenstand der Erfindung ist ein Verfahren zur Trennung von Zweiphasengemischen, die bei der Synthese aromatischer Polyester nach dem Zweiphasengrenzflächenverfahren anfallen, in eine wäßrige und eine organische Phase, dadurch gekennzeichnet, daß man dem zu trennenden Zweiphasengemisch

A. 10 - 10 000, vorzugsweise 100 - 1000, ppm, bezogen auf das Gewicht der wäßrigen Phase, mindestens einer Ammoniumverbindung, die pro Molekül mindestens ein quartäres Stickstoffatom besitzt, das als Substituenten mindestens einen, aber höchstens zwei langkettige Kohlenwasserstoffreste mit 6 - 40, vorzugsweise 7 - 24, C-Atomen und mindestens zwei, aber höchstens drei kurzkettige Kohlenwasserstoffreste mit weniger als 6 C-Atomen, vorzugsweise weniger als 4 C-Atomen, trägt,

wobei zwei kurzkettige Kohlenwasserstoffreste zusammen mit dem Stickstoffatom einen Imidazolinyl-, Pyridyl- oder Oxazolinylrest bedeuten können und/oder

die langkettigen Kohlenwasserstoffreste durch 1 - 2, vorzugsweise 1, Sulfonylaminogruppen ($-SO_2NH-$) unterbrochen und im Falle von mehr als einem quartären Stickstoffatom die Stickstoffatome durch einen Hydroxialkylenrest verbunden sein können,

oder

B. 0,1 - 1000, vorzugsweise 5 - 100, ppm, bezogen auf das Gewicht der wäßrigen Phase, mindestens eines wasserlöslichen anionischen organischen Polymeren mit einem mittleren Molekulargewicht $\bar{M}_w$ von 2000 - 5 000 000, vorzugsweise 4000 - 2 000 000, insbesondere 10 000 bis 1 000 000, und Carboxyl-, Sulfo-,

saure Phosphat-, saure Sulfatgruppen und/oder deren wasserlösliche Salze entsprechend einer Ladungsdichte von 0,0005 - 0,02, vorzugsweise 0,001 - 0,01,

zusetzt

Beispiele der Verbindungen A und B sind in Ullmann's Encyklopädie der technischen Chemie, 4. Aufl., Bd. 10, 449 - 473, Verlag Chemie, Weinheim 1975, und in Mc Cutcheon's "Detergents & Emulsifiers", Mc Cutcheon Division, MC Publishing Co., Glen Rock, N.J. (1979) beschrieben.

Eine bevorzugte Verbindungsklasse sind diejenigen Verbindungen A, bei denen mindestens einer der langkettigen Kohlenwasserstoffsubstituenten der Stickstoffatome wenigstens eine Sulfonylaminogruppe enthält; Carbonamidgruppen sollen die Verbindungen A dagegen vorzugsweise nicht enthalten.

Besonders bevorzugte Verbindungen A sind Benzyldodecyldimethyl- und Cetyltrimethylammoniumsalze, Cetylpyridiniumsalze, Alkylimidazoliniumsalze und Alkyloxazoliniumsalze sowie Ammoniumsalze der Strukturen

$$C_{15}H_{31}SO_2NH-(CH_2)_3-\overset{CH_3}{\underset{CH_3}{\overset{\oplus}{N}}}-C_9H_{19} \qquad X^{\ominus}$$

$$C_{15}H_{31}SO_2NH-(CH_2)_3-\overset{CH_3}{\underset{CH_3}{\overset{\oplus}{N}}}-CH_2C_6H_5 \qquad X^{\ominus}$$

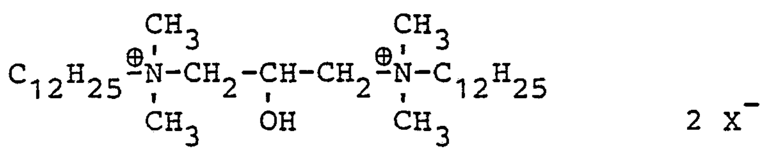

worin $X^-$ ein Anion, vorzugsweise Halogenid, wie z.B. Bromid oder Chlorid bedeutet.

Bevorzugte Verbindungen B sind Carboximethylcellulose, Poly(meth)acrylsäure, Alginate, organische Polyphosphorsäureesteranhydride (z.B. Polymetaphosphorsäureester), Polystyrolsulfonsäure, -sulfonat und die entsprechenden Kern-$C_1$-$C_3$-alkylsubstituierten Derivate, Polyvinylsulfat, Ligninsulfonat, Cellulosesulfat, sulfonierte aromatische Formaldehydkondensate (z.B. sulfonierte Novolake), kondensiertes Naphthalinsulfonat und Polybenzylsulfonate. Besonders bevorzugte Verbindungen sind die Alginate, Sulfonsäuren, Sulfonate und Sulfate.

Die Verbindungen B können als freie Säuren oder in Form ihrer Salze eingesetzt werden, sofern diese wasserlöslich sind. Als Kationen können alle Ionen fungieren, die ein wasserlösliches Salz bilden; in der Regel werden Alkali-, Erdalkali- und Ammoniumsalze, insbesondere die Lithium-, Kalium-, Natrium- und Ammoniumsalze, bevorzugt.

Unter "Ladungsdichte" wird der Quotient Mol Carboxyl-, Sulfo-, saurer Phosphat- bzw. saurer Sulfatgruppen bzw. der entsprechenden Salze pro g Verbindung B verstanden. Methoden für Bestimmung der Ladungsdichte sind im Prinzip bekannt; vgl. A.S. Michaels und O. Morelos, Ind. Eng. Chem. 47, 1801 (1955); S. Kawamura und Y. Tanaka, Water and Sewage Works 114, 324 (1967); A.C. Zettlemoyer, F.J. Micale und R.L. Dole, NCASI, Techn. Bull. 225, Dez. 1968.

Innerhalb des zulässigen Bereiches der Ladungsdichte gilt folgendes: Verbindungen B mit niedrigen Molekulargewichten sollen hohe Ladungsdichten besitzen. Verbindungen B mit höheren Molekulargewichten können niedrige und hohe Ladungsdichten besitzen. Ganz allgemein gilt, daß hohe Ladungsdichten in der Regel bessere Ergebnisse bringen.

Das nach dem Ende der Polyestersynthese notwendige Abtrennen des Alkalihydroxids, der Katalysatoren und der entstandenen Salze erfolgt im allgemeinen nach folgendem Schema:

1. Trennung des alkalischen Zweiphasengemischs durch Absitzen oder Zentrifugieren;

2. Ansäuern der organischen Phase aus 1) und Trennen wie unter 1), evtl. Wiederholung;

3. Waschen der organischen Phase aus 2) mit Wasser und Trennen wie unter 1), evtl. mehrfache Wiederholung.

Es hat sich herausgestellt, daß in der Regel die Trennung in Stufen 1) und 2) durch die Verbindungen A und in Stufe 3) durch die Verbindungen B begünstigt wird. Die Wirkung der genannten Verbindungen ist überaus überraschend, da das einzige evtl. emulgierend wirkende Ausgangsmaterial für die Synthese aromatischer Polyester der Katalysator - meist also eine quartäre

Ammonium- oder Phosphoniumverbindung - ist, nach Ullmann's Encyklopädie der technischen Chemie, 4. Aufl., Bd. 10, 453, Verlag Chemie, Weinheim 1975, die Zugabe einer kationischen Verbindung zu einer mit einem anionischen Emulgator stabilisierten Emulsion meistens zu einem schnellen Brechen der Emulsion führt, und man erwarten mußte, daß analog die Zugabe einer anionischen Verbindung zu einer mit einem kationischen Emulgator stabilisierten Emulsion ebenfalls zu einem Brechen der Emulsion führt. Der Fachmann hätte also erwarten müssen, daß der Zusatz von kationischen Verbindungen in den Schritten 1) und 2) bei Gegenwart eines ebenfalls kationischen Katalysators die Phasentrennung verschlechtert oder gar verhindert. Überraschend ist weiterhin, daß die erfindungsgemäß zugesetzten Verbindungen A und B eine ungewöhnlich geringe Wirkungsabhängigkeit von der zugesetzten Menge aufweisen.

Die erfindungsgemäße Aufarbeitung von Zweiphasengemischen aromatischer Polyester ist insbesondere mit Erfolg anwendbar, wenn die aromatischen Polyester aus mindestens einem Diphenol der Formel

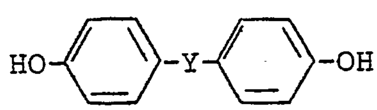

(II)

in der

Y eine Einfachbindung, einen Alkylen- oder Alkylidenrest mit 1-7 C-Atomen, einen Cycloalkylen- oder Cycloalkylidenrest mit 5-12 C-Atomen, -O-, -S-, $-\underset{\overset{\|}{O}}{S}-$, $-SO_2-$ oder $-\underset{\overset{\|}{O}}{C}-$ bedeutet,

und/oder deren kernalkylierte und kernhalogenierte Derivate, vorzugsweise aus mindestens einem Diphenol der Reihe

Hydrochinon,
Resorcin,
Dihydroxidiphenyle,
Bis-(hydroxiphenyl)-alkane,
Bis-(hydroxiphenyl)-cycloalkane,
Bis-(hydroxiphenyl)-sulfide,
Bis-(hydroxiphenyl)-ether,
Bis-(hydroxiphenyl)-ketone,
Bis-(hydroxiphenyl)-sulfoxide,
Bis-(hydroxiphenyl)-sulfone und
$\alpha$, $\alpha$'-Bis-(hydroxiphenyl)-diisopropylbenzole,

sowie deren kernalkylierte und -halogenierte Derivate, insbesondere aus mindestens einem Diphenol der Reihe

2,2-Bis-(4-hydroxiphenyl)-propan,
Bis-(4-hydroxiphenyl)-sulfid,
1,1-Bis-(4-hydroxiphenyl)-cyclohexan,
$\alpha$, $\alpha$'-Bis-(4-hydroxiphenyl)-p-diisopropylbenzol,
2,2-Bis-(3-methyl-4-hydroxiphenyl)-propan,
2,2-Bis-(3,5-dichlor-4-hydroxiphenyl)-propan,
2,2-Bis-(3,5-dibrom-4-hydroxiphenyl)-propan

hergestellt werden.

Besonders bevorzugte aromatische Polyester sind solche, deren Diphenolkomponente zu mindestens 50, vorzugsweise mindestens 85, Mol-% aus Resten von 2,2-Bis-(4-hydroxiphenyl)-propan besteht.

Die Prozentangaben in den folgenden Beispielen beziehen sich auf das Gewicht.

Beispiele

Beispiel 1 Aromatischer Polyester aus Bisphenol-A, Iso- und Terephthalsäuredichlorid, alkalisch abgetrennte organische Phase

4,56 kg Bisphenol-A werden in 3,79 kg 45 %iger Natronlauge und 38,6 kg destilliertem Wasser gelöst. Anschließend werden 100 g Triethylbenzylammoniumchlorid, 16 kg Methylenchlorid und 9,5 kg Chlorbenzol zugegeben. In das stark gerührte Zweiphasengemisch wird bei Raumtemperatur eine Lösung von 4,172 kg eines Gemisches gleicher Teile Iso- und Terephthalsäuredichlorid und von 226,6 g p-Isooctylphenol in 6 kg Methylenchlorid innerhalb von 20 Minuten zugetropft. Danach wird noch 1 Stunde bei Raumtemperatur gerührt.

Es bildet sich eine Emulsion, die weder durch Stehen noch durch Stehen und weiteres Verdünnen der organischen Phase mit Methylenchlorid oder der wäßrigen Phase mit Wasser noch durch eine diskontinuierlich oder kontinuierlich arbeitende Zentrifuge noch durch Ansäuern scharf in eine organische und wäßrige Phase getrennt werden kann. In jedem Fall bilden sich bei dem Versuch der Phasentrennung emulgierte Zwischenschichten aus wäßriger und organischer Phase, die nicht getrennt werden können.

Dagegen läßt sich erfindungsgemäß eine glatte Phasentrennung in eine organische und alkalisch-wäßrige Phase durch Stehen oder Zentrifugieren herbeiführen, wenn man nach dem einstündigen Nachrühren 11 g einer 50 %igen wäßrigen Benzyldodecyl-dimethyl-ammoniumchlorid-Lösung zugibt.

Dasselbe Ergebnis erhält man, wenn nach dem einstündigen Nachrühren 20 g einer 50 %igen wäßrigen Lösung von

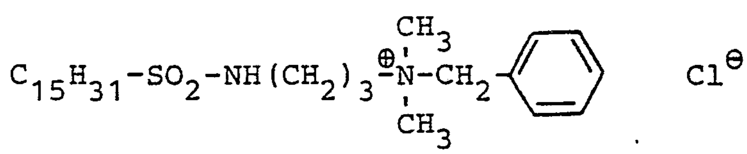

oder 25 g einer 50 %igen wäßrigen Lösung von

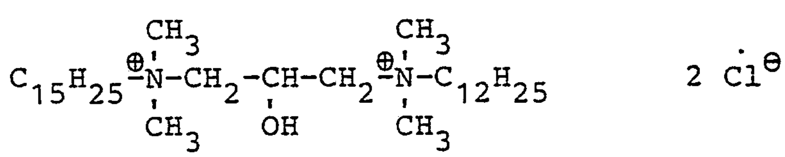

zusetzt.

Beispiel 2 Aromatischer Polyester aus Bisphenol-A, Iso- und Terephthalsäuredichlorid, sauer abgetrennte organische Phase

4,56 kg Bisphenol-A werden in 3,79 kg 45 %iger Natronlauge und 112 kg destilliertem Wasser gelöst. Anschließend werden 100 g Triethylbenzylammoniumchlorid, 32 kg

Methylenchlorid und 25,8 kg Chlorbenzol zugegeben. In das stark gerührte Zweiphasengemisch wird bei Raumtemperatur eine Lösung von 4,172 kg eines Gemisches gleicher Teile Iso- und Terephthalsäuredichlorid und von 226,6 g p-Isooctylphenol in 6 kg Methylenchlorid innerhalb von 20 Minuten zugetropft. Danach wird noch 1 Stunde bei Raumtemperatur gerührt.

Nach Abtrennen der organischen Phase wird diese zur weiteren Aufarbeitung mit 100 l 2 %iger wäßriger Phosphorsäure angesäuert. Dabei bildet sich eine Emulsion, die weder durch Stehen noch durch Zentrifugieren gebrochen werden kann.

Werden dagegen gleichzeitig mit der wäßrigen Phosphorsäure 12 g einer 50 %igen wäßrigen Lösung von

$$C_{15}H_{31}-SO_2-NH-(CH_2)_3-\overset{CH_3}{\underset{CH_3}{\overset{|}{\underset{|}{N^{\oplus}}}}}-C_9H_{19} \quad Cl^{\ominus}$$

zugegeben, so erhält man nach Stehen oder Zentrifugieren eine scharfe Trennung beider Phasen.

<u>Beispiel 3</u> Wasserwäsche der nach dem Ansäuern abgetrennten organischen Phase

Die organische Phase, die aus den Ansätzen aus Beispielen 1 und 2 nach dem Ansäuern abgetrennt werden

kann, läßt sich bis zum Erreichen eines pH-Wertes von etwa 4 mit destilliertem Wasser ohne Bildung einer Emulsion waschen. Wird dieses kritische pH-Wert unterschritten, so läßt sich eine Phasentrennung weder durch Stehenlassen noch durch Verdünnen mit Wasser oder Methylenchlorid noch durch Zentrifugieren erreichen.

Wird mit dem Waschwasser dagegen einer der folgenden Zusätze zugegeben, kommt es zu keiner Emulsionsbildung:

a) 10 ppm Polystyrolsulfonsäure
b) 2,5 ppm Polyvinylsulfat, K-Salz
c) 10 ppm Polystyrolsulfonsäure, Na-Salz
d) 10 ppm Ligninsulfonat, Na-Salz
e) 50 ppm Alginat, Na-Salz,
f) 50 ppm Carboximethylcellulose, Na-Salz
g) 75 ppm 2-Ethylhexylpolyphosphorsäureesteranhydrid, K-Salz
h) 50 ppm kondensiertes Naphthalinsulfonat, Na-Salz
i) 75 ppm Cellulosesulfat, Na-Salz

Die Menge bezieht sich hier auf zugesetztes destilliertes Wasser.

Ladungsdichten und zur Beseitigung der Emulsion mögliche Mengen an Zusatz (bezogen auf Waschwasser)

| Zusatz | Ladungsdichte | Zusatz [ppm] |
|---|---|---|
| a | 0,005 | 5-100 |
| b | 0,008 | 2,5-100 |
| c | 0,004 | 5-100 |

| Zusatz | Ladungsdichte | Zusatz /ppm/ |
|---|---|---|
| d | 0,0015 | 5-100 |
| e | 0,002 | 5-250 |
| f | 0,004 | 25-100 |
| g | 0,003 | 25-100 |
| h | 0,002 | 10-100 |
| i | 0,003 | 2,5-100 |

Patentansprüche

1. Verfahren zur Trennung von Zweiphasengemischen, die bei der Synthese aromatischer Polyester nach dem Zweiphasengrenzflächenverfahren anfallen, in eine wäßrige und eine organische Phase, dadurch gekennzeichnet, daß man dem zu trennenden Zweiphasengemisch

A. 10 - 10 000 ppm, bezogen auf das Gewicht der wäßrigen Phase, mindestens einer Ammoniumverbindung, die pro Molekül mindestens ein quartäres Stickstoffatom besitzt, das als Substituenten mindestens einen, aber höchstens zwei langkettige Kohlenwasserstoffreste mit 6 - 40 C-Atomen und mindestens zwei, aber höchstens drei kurzkettige Kohlenwasserstoffe mit weniger als 6 C-Atomen trägt,

wobei zwei kurzkettige Kohlenwasserstoffreste zusammen mit dem Stickstoffatom einen Imidazolinyl-, Pyridyl- oder Oxazolinylrest bedeuten können und/oder

die langkettigen Kohlenwasserstoffreste durch 1 - 2 Sulfonylaminogruppen ($-SO_2NH-$) unterbrochen und im Falle von mehr als einem quartären Stickstoffatom die Stickstoffatome durch einen Hydroxialkylenrest verbunden sein können,

oder

B. 0,1 - 1000 ppm, bezogen auf das Gewicht der wäßrigen Phase, mindestens eines wasserlöslichen anionischen organischen Polymeren mit einem mittleren Molekulargewicht $\bar{M}_w$ von 2000 - 5 000 000 und Carboxyl-, Sulfo-, saure Phosphat-, saure Sulfatgruppen und/oder deren wasserlösliche Salze entsprechend einer Ladungsdichte von 0,0005 - 0,02

zusetzt.

2. Verfahren nach Anspruch 1, dadurch gekennzeichnet, daß die Ammoniumverbindungen A in einer Menge von 100 - 1000 ppm, bezogen auf das Gewicht der wäßrigen Phase, zugesetzt werden.

3. Verfahren nach Ansprüchen 1 und 2, dadurch gekennzeichnet, daß die am Stickstoffatom der Ammoniumverbindungen A sitzenden langkettigen Kohlenwasserstoffreste 7 - 24 C-Atome tragen.

4. Verfahren nach Ansprüchen 1 - 3, dadurch gekennzeichnet, daß die Polymeren B in einer Menge von 5 - 100 ppm, bezogen auf das Gewicht der wäßrigen Phase, zugesetzt werden.

5. Verfahren nach Ansprüchen 1 - 4, dadurch gekennzeichnet, daß die Polymeren B ein mittleres Molekulargewicht $\bar{M}_w$ von 4000 - 2 000 000 besitzen.

6. Verfahren nach Ansprüchen 1 - 5, dadurch gekennzeichnet, daß die Polymeren B ein mittleres Molekulargewicht $\bar{M}_w$ von 10 000 - 1 000 000 besitzen.

7. Verfahren nach Ansprüchen 1 - 6, dadurch gekennzeichnet, daß die Polymeren B eine Ladungsdichte von 0,001 - 0,01 besitzen.

8. Verfahren nach Ansprüchen 1 - 7, dadurch gekennzeichnet, daß die Polymeren B aus der Reihe Carboximethylcellulose, Poly(meth)acrylsäure, Alginate, komplexe organische Polyphosphorsäureesteranhydride, Polystyrolsulfonsäure und -sulfonat, Polyvinylsulfat, Ligninsulfat, Cellulosesulfat, sulfonierte aromatische Formaldehydkondensate ausgewählt sind.

9. Verfahren nach Ansprüchen 1 - 8, dadurch gekennzeichnet, daß die Polymeren B aus der Reihe Alginate, Sulfonsäuren, Sulfonate und Sulfate ausgewählt sind.

10. Verfahren nach Ansprüchen 1 - 9, dadurch gekennzeichnet, daß die aromatischen Polyester mindestens 85 Mol-%, bezogen auf die Diphenolreste, Reste von Bisphenol-A oder o,o,o',o'-Tetramethylbisphenol-A enthalten.